# EUROPEAN PATENT SPECIFICATION

(11) **EP 1 733 152 B1**
(45) Date of publication and mention of the grant of the patent: **31.05.2017**
(21) Application number: 04725787.8
(22) Date of filing: 05.04.2004
(51) Int. Cl.: F16D 55/00, F16D 55/28, F16D 65/14

(54) **BRAKING DEVICE FOR APPARATUSES DRIVEN BY AN ELECTRIC MOTOR**
BREMSVORRICHTUNG FÜR VON EINEM ELEKTROMOTOR ANGETRIEBENE APPARATE
DISPOSITIF DE FREINAGE POUR APPAREILS ENTRAINES PAR MOTEUR ELECTRIQUE

(43) Date of publication of application: 20.12.2006
(73) Proprietor: Coel Motori S.R.L., 20090 Fizzonasco di Pieve Emanuele (IT)
(72) Inventor: PAONE, Guido, I-27010 Siziano (IT); PAONE, Andrea, I-27010 Siziano (IT)
(74) Representative: Borsano, Corrado
(86) International application number: PCT/IT2004/000174
(87) International publication number: WO 2005/098258

(56) References cited:
- DE-C- 636 888
- GB-A- 1 040 864
- US-A- 2 292 704
- US-A- 5 412 272
- PATENT ABSTRACTS OF JAPAN vol. 0111, no. 79 (E-514), 9 June 1987 (1987-06-09) & JP 62 012347 A (NIPPON YUSOKI), 21 January 1987 (1987-01-21)

## Description

### Field of the invention

The present invention concerns a braking device for equipment driven by electric motors in general and, in particular, a braking device for equipment driven by explosion-proof electric motors.

### Background of the invention

Explosion-proof electric motors are generally installed in sites or environments in which substances that can give rise to combustion and/or explosion are present. For these reasons, explosion-proof motors must be produced to guarantee total insulation of the components present inside the motor from the external environment. In addition to the extensive use of sealing elements, particularly accurate machining is required to comply with the very fine tolerances. Consequently, the production of electric motors with explosion-proof characteristics is in itself complex and costly.

Further complications and machining costs are added if the explosion-proof electric motors have to be produced with self-braking characteristics, in other words incorporating a brake unit that can automatically halt rotation of the motor in the event of sudden interruptions in the electrical power supply.

In the known technique, self-braking explosion-proof electric motors are produced in one single sealed case that encloses in the front part the motor elements and in the rear part the brake unit elements. All the rotating parts of the motor and brake unit are fitted on a common rotating shaft, of which only the end designed for coupling of a mechanical part to be rotated protrudes at the front. The difficulty of obtaining a high machining precision with increase in the length of the mechanical parts of the motor, for example the only rotating shaft in the motor, is therefore evident.

Furthermore, given the delicate operations involved in production of a self-braking motor with explosion-proof characteristics, any problem in the brake unit only or in the motor only inevitably entails replacement of the whole unit. In fact, any maintenance and/or overhauling operations for replacement of one or more components of the whole unit could affect the explosion-proof characteristics and therefore constitute an unacceptable risk for the particular applications for which they are Intended.

GB-A-1040864 discloses electromagnetic friction brakes and clutches to be mounted as modular units on electric motors. The brake unit is housed in an open casing suitable to be mounted on the front of an electric motor.

US-A-2292704 also discloses an electromagnetic brake to be mounted on the front of an electric motor. The electromagnetic brake is housed in a casing having an octagonal end-to-end opening, as well as a supporting field member having a center opening for receiving the coupling of the driving shaft of the electric motor.

JP-A-62012347 discloses an explosion-proof carrier wherein an electromagnetic brake and a rotational frequency detector are installed on a transmission output shaft of an electric motor and housed in a common explosion-proof casing. The brake unit can not be separated from the electric motor without loosing the explosion-proof seal.

### Summary of the invention

In view of the above, the object of the present invention is to propose a braking device which makes the production, management and maintenance of self-braking explosion-proof electric motors simpler and cheaper.

Another object of the present invention is to propose a braking device that guarantees Improved reliability in terms of explosion-proof characteristics.

A further object of the present invention is to provide a self-braking explosion-proof electric motor involving more limited production and maintenance costs with respect to the equivalent motors currently known.

These objects are achieved by the present invention which concerns a braking device according to claim 1.

A separate independent braking device is therefore provided which can be connected to any electric motor to transform It into a self-braking electric motor.

The advantage of a device according to the present invention is that it can be fitted at any point of the kinematic chain driven by the electric motor, for example downstream of a reduction unit driven by the electric motor, or downstream of a coupling with the electric motor shaft.

In the device according to the present invention sealing means are preferably provided to make the device explosion-proof. In fact the device is advantageously applied in the production of self-braking explosion-proof electric motors.

In other words, the present invention provides a self-braking explosion-proof electric motor with separate explosion-proof motor and braking device, the latter also having the same explosion-proof characteristics, and therefore connecting while rotating, directly or indirectly, the braking device to the motor. The braking device shaft is mechanically connected to the explosion-proof electric motor shaft to obtain an explosion-proof motor with automatic braking characteristics.

The advantages of the present invention are particularly evident. Firstly, during production, it is possible to work on more limited dimensions, In particular as regards the length of the motor shaft and the length of the rotating shaft in the separate braking device. This results in high machining precision with evident economic advantages and greater reliability as regards compliance with the limited tolerances necessary to obtain the seal characteristics.

Furthermore, In terms of management and maintenance, In the event of problems in the motor or braking device, only the faulty element has to be replaced, with evident advantages in terms of costs and overall reliability.

The direct or indirect rotation connection between the braking device and the motor with which it is combined is preferably obtained via an axial seat located at a first end of the rotating shaft in the braking device and accessible from the outside of the casing. The axial seat is shaped and sized to house coaxially inside it the coupling end of the shaft that protrudes from the front of the electric motor, or the end of a shaft of a device rotated by the electric motor. The mechanical connection between the two shafts is of the removable type, thus permitting separation of the braking device in the event of replacement.

The opposite end of the rotating shaft of the device protrudes on the outside of the casing to permit connection to a mechanical part to be rotated by the electric motor combined with the device.

Also the casing of the device can comprise means for rigidly connecting in a removable way the casing to the frame of the electric motor with which it is combined, or in any case to a fixed structure of a device rotated by the electric motor. For example, in the case of connection to the electric motor, the casing of the device can comprise at least one first portion designed to be fixed to the assembly flange at the front on the frame of the electric motor with which it is combined. A second portion of casing, fitted to provide a seal, in a removable way, with the first portion, can comprise in turn at least one assembly flange.

The production of a separate braking device also has further practical advantages. The dimensions and shape of the coupling shafts, and of the frames and respective flanges or fixing portions are highly standardised, but installation of the motor in several applications often requires the use of adapters.

The braking device casing can be advantageously produced with standard dimensions and shape on the motor mechanical connection side, while on the outlet side, where the outer end of the rotating shaft of the braking device protrudes, the casing can, for example, be produced according to installation requirements. In the same way, the coupling end of the shaft coming out of the braking device can be produced with shape and dimensions to suit the particular coupling requirements.

### Brief description of the drawings

Further characteristics and advantages of the present invention will be clearer from the following illustrative and non-restrictive description with reference to the attached schematic drawings, in which:
- Figure 1 is a plan view of an embodiment of a braking device according to the present invention and an electric motor combined with it in separate condition;
- Figure 2 is a view of an embodiment of a braking device according to the present invention taken from the electric motor connection side and with some details in section; and
- Figure 3 is a view illustrating some of the components that constitute the braking device shown in Figures 1 and 2.

### Modes for carrying out the invention

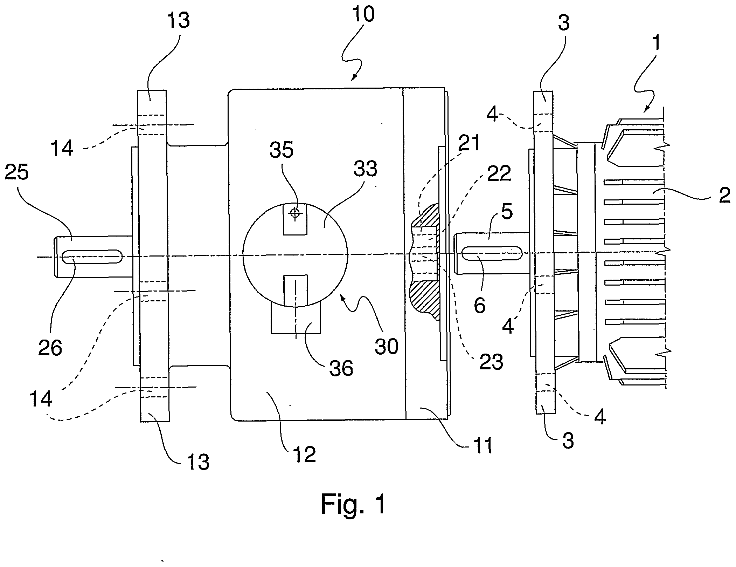

Figure 1 shows the front part of an electric motor 1, for example an explosion-proof electric motor, the frame 2 of which is provided at the front with an assembly flange 3 provided with through holes 4 that permit installation of the motor 1 by means of screws, threaded pins or the like. An end portion 5 of the motor shaft protrudes from the front part of the frame 2, the end portion being provided, for example, with a slot 6 to house known coupling devices such as keys or the like.

The braking device 10 according to the embodiment herein illustrated comprises a casing with explosion-proof seal consisting of a first portion 11 designed to be fixed to the flange 3 of the electric motor 1 and a second portion 12 fixed to provide a seal, in a removable way, to the first portion 11. The second portion 12 of the casing comprises at the front an assembly flange 13 which can have any shape and dimensions, or shape and dimensions similar to the flange 3 of the motor 1, as shown in Figure 1, with through holes 14 having the same arrangement as the through holes 4 in the flange 3 of the electric motor 1.

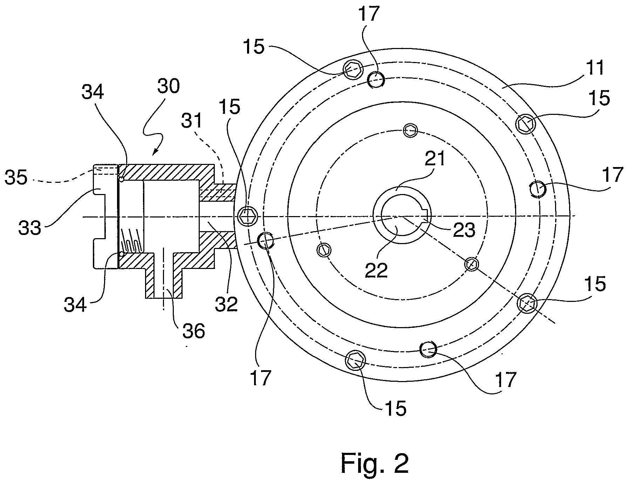

Referring now also to the embodiment illustrated in Figure 2, the mechanical connection between the frame 2 of the electric motor 1 and the portion of casing 11 is obtained by means of screws inserted in the through holes 4 and engaged in corresponding threaded holes 17 in the portion of casing 11.

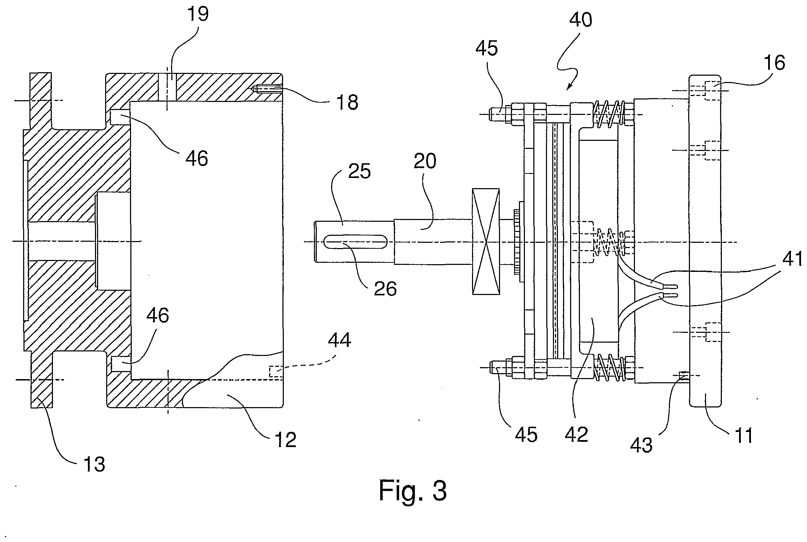

The device according to the invention furthermore comprises a container 30 for the electrical leads 41 coming out of the casing, said leads powering the solenoid 42 of a brake unit 40 (Figure 3).

The brake power supply container 30 is sealingly mounted on the portion of casing 12 by means of one or more threads (not shown) engaged in corresponding fastening holes 31. A connection duct 32 of the container 30 is aligned with a through hole 19 (Figure 3) in the portion of casing 12.

On the upper part of the container there is a closing plug 33 screw-engaged in a corresponding threaded internal portion of the container 30. A threaded through hole 35 permits insertion of a locking screw (not shown) designed to prevent accidental unscrewing of the plug 33 from the container 30. A sealing element 34, for example an elastic ring such as an O ring seal, guarantees the seal between the plug 33 and the remaining part of the container 30.

The electrical power supply cables of the brake unit 40 are inserted in the coupling 36 on which a further sealing element is then provided, for example an elastic grommet, in order to guarantee the explosion-proof seal with respect to the external environment in the area crossed by the cables as they run towards the outside of the container.

Now referring also to Figure 3, the rotating elements of the brake unit 40 are mounted integral in rotation with a rotating shaft 20, of which a first end 21 (Figures 1 and 2) comprises an axial seat 22 designed to house coaxially inside it, and in a removable way, the coupling end 5 of the shaft protruding from the front of the electric motor 1. The seat 22 furthermore has an axial slot 23 designed to house the protruding key which will be fitted in the seat 6 of the shaft 5 to enable the electric motor 1 to rotate the rotating shaft 20. As can be seen from the view of Figure 2, the axial seat 22 at the end 21 of the shaft 20 is accessible from the outside of the braking device casing to permit removable connection between the braking device and the motor.

On the opposite side, the rotating shaft 20 comprises an end portion 25 that protrudes externally from the casing of the braking device 10 to permit connection to a mechanical part to be rotated by the motor 1. Also at the end 25 there can be a seat 26 to house a key or other suitable coupling means.

The seal between the portion of casing 11 and 12 is obtained by means of screws 15 (Figure 2) inserted in through holes 16 of the portion of casing 11 and screw-engaged in corresponding nut screws 18 in the portion of casing 12 (Figure 3). The closure between the two portions of casing can, if necessary, include the insertion of sealing elements and/or sealing substances between the contact surfaces to guarantee the required explosion-proof seal characteristics.

To facilitate correct assembly between the two portions of casing 11 and 12, a locating pin 43 is provided integral with the portion 11 and designed to be inserted in a corresponding blind hole 44 on the portion 12.

The columns 45 (generally three or more columns) which sustain the axially mobile elements (e.g. mobile anchor) of the brake unit are also fitted on the portion of casing 11, integral with it. The ends of the columns 45 are designed to be inserted in corresponding blind holes 46 in the portion of casing 12 in order to provide greater coupling solidity between the two portions 11 and 12 of the casing.

Various modifications can be made while remaining within the scope of the present invention. For example, the mechanical connection between the casing of the braking device and the motor can be provided also with other known means if the motor frame has no flange. In the same way, the casing of the device can also be provided with connection elements different from the assembly flange 13 on the front part of the portion of casing 12. Also the coupling end 25 of the rotating shaft 20 can have different shape and dimensions with respect to those illustrated here as an example.

Furthermore, with respect to the example of direct connection with an electric motor as shown in Figure 1, it should be pointed out that a device according to the present invention can also be connected indirectly to the electric motor, i.e. at any point of the kinematic chain driven by the electric motor.

## Claims

1. A braking device (10) for equipment driven by an electric motor (1), comprising at least one rotating shaft (20) on which at least one element of a brake unit (40) is fitted, integral in rotation with said shaft (20), and at least one casing (11, 12) which houses at least said rotating shaft (20) and at least said brake unit (40), wherein said casing (11, 12) is separate from the frame (2) of the electric driving motor (1) and wherein means (22) are provided for directly connecting during rotation said rotating shaft (20) to a shaft (5) driven by said electric motor (1), said casing comprising a first portion (11) and a second portion (12) fixed, in a removable way, to said first portion to provide a seal, and wherein said casing (11, 12) comprises one side of said first portion adapted to be rigidly connected, in a removable way, directly to a flange (3) of said frame of the motor (1), and one opposite side of said second portion comprising a flange (13), said rotating shaft (20) comprising a second end (25) protruding externally from said opposite side of the casing (11, 12) and adapted to be connected to a mechanical part to be rotated by the motor (1),
**characterised in that**
sealing means are provided to give the braking device itself the explosion-proof seal characteristics, said sealing means comprising said casing (11, 12) with explosion-proof seal, and **in that** the braking device further comprises columns (45) which sustain axially mobile elements of the braking device, said columns being fitted integral on said first portion (11), the ends of said columns (45) being adapted to be inserted in corresponding blind holes (46) in said second portion (12) in order to provide greater coupling solidity between said first and second portion.

2. A braking device according to claim 1, wherein at least one first end (21) of said rotating shaft (20) comprises an axial seat (22) designed to house coaxially inside it, and in a removable way, the coupling end (5) of a shaft driven by an electric motor (1) and permit rotation of said rotating shaft (20) by said electric motor (1).

3. A braking device according to claim 2, wherein said axial seat (22) can be accessed from the outside of said casing.

4. A braking device according to claim 2, wherein said seat (22) has shape and dimensions designed to house the coupling end (5) of the shaft protruding at the front of an electric motor (1).

5. An explosion-proof electric motor (1) of the self-braking type, **characterized by** comprising a braking device (10) according to any of claims 1 to 4.

## Patentansprüche

1. Bremsvorrichtung (10) für ein Gerät, das durch einen elektrischen Motor (1) angetrieben wird, umfassend mindestens einen Rotationsschaft (20), an dem mindestens ein Element einer Bremseinheit (40) integral in Rotation mit dem Schaft (20) angepasst ist, und mindestens ein Gehäuse (11, 12), das zumindest den Rotationsschaft (20) und die Bremseinheit (40) einhaust, wobei das Gehäuse (11, 12) vom Gestell (2) des elektrischen Antriebsmotors (1) separiert ist, und wobei Mittel (22) bereitgestellt sind, um den Rotationsschaft (20) mit einem Schaft (5), der vom Elektromotor (1) angetrieben wird, während der Drehung direkt zu verbinden,
wobei das Gehäuse einen ersten Bereich (11) und einen zweiten Bereich (12) umfasst, der in entfernbarer Weise mit dem ersten Bereich verbunden ist, um eine Abdichtung zu bilden, und wobei das Gehäuse (11, 12) eine Seite an dem ersten Bereich aufweist, der eingerichtet ist, starr in entfernbarer Weise direkt mit einem Flansch des Gestells des Motors (1) verbunden zu sein, und eine gegenüberliegende Seite des zweiten Bereichs einen Flansch (13) umfasst, wobei der Rotationsschaft (20) ein zweites Ende (25) umfasst, das außerhalb von der gegenüberliegenden Seite des Gehäuses (11, 12) hervortritt und eingerichtet ist, mit einem mechanischen Teil, das von dem Motor (1) rotiert werden soll, verbunden zu werden,
**dadurch gekennzeichnet, dass**
Abdichtmittel bereitgestellt sind, um der Bremsvorrichtung selbst explosionssichere Abdichtcharakteristiken bereitzustellen, wobei die Abdichtmittel das Gehäuse (11, 12) mit explosionssicherer Abdichtung umfassen, und dadurch, dass die Bremsvorrichtung ferner Stützen (45) umfasst, die axiale bewegliche Elemente der Bremsvorrichtung unterstützen, wobei die Stützen integral an dem ersten Bereich (11) angepasst sind und die Enden der Stützen (45) eingerichtet sind, um in entsprechende Blindlöcher in dem zweiten Bereich (12) eingeführt zu werden, um größere Verbindungsfestigkeit zwischen dem ersten und dem zweiten Bereich bereitzustellen.

2. Bremsvorrichtung nach Anspruch 1, wobei mindestens ein erstes Ende (21) des Rotationsschafts (20) einen axialen Sitz (22) aufweist, um koaxial darin, in entfernbarer Weise, das Verbindungsende (5) des Schafts, der durch einen elektrischen Motor (1) angetrieben wird, einzuhausen und eine Rotation des Rotationsschafts (20) durch den Elektromotor (1) zu erlauben.

3. Bremsvorrichtung nach Anspruch 2, wobei auf den axialen Sitz (22) von außerhalb des Gehäuses zugegriffen werden kann.

4. Bremsvorrichtung nach Anspruch 2, wobei der Sitz (22) eine Form und Abmessungen aufweist, um das Verbindungsende (5) des Schafts, der an der Vorderseite des Elektromotors (1) hervortritt, aufzunehmen.

5. Explosionsgesicherter Elektromotor (1) des selbstbremsenden Typs, **gekennzeichnet durch** das Umfassen einer Bremsvorrichtung (10) nach einem der Ansprüche 1 bis 4.

## Revendications

1. Dispositif de freinage (10) pour un équipement entraîné par un moteur électrique (1), comprenant au moins un arbre rotatif (20) sur lequel au moins un élément d'une unité de freinage (40) est monté, d'un seul tenant en rotation avec ledit arbre (20), et au moins un carter (11, 12) qui loge au moins ledit arbre rotatif (20) et au moins ladite unité de freinage (40), dans lequel ledit carter (11, 12) est séparé du châssis (2) du moteur d'entraînement électrique (1) et dans lequel des moyens (22) sont prévus pour raccorder directement pendant la rotation ledit arbre rotatif (20) à un arbre (5) entraîné par ledit moteur électrique (1),
ledit carter comprenant une première partie (11) et une deuxième partie (12) fixée, de façon amovible, à ladite première partie pour assurer un joint, et dans lequel ledit carter (11, 12) comprend un côté de ladite première partie adapté pour être raccordé rigidement, de façon amovible, directement à un flasque (3) du deuxième du moteur (1), et un côté opposé de ladite deuxième partie comprenant un flasque (13), ledit arbre rotatif (20) comprenant une deuxième extrémité (25) faisant saillie vers l'extérieur à partir dudit côté opposé du carter (11, 12) et adapté pour être raccordée à une pièce mécanique à mettre en rotation par le moteur (1),
**caractérisé en ce que**
des moyens d'étanchéité sont prévus pour donner au dispositif de freinage les caractéristiques de joint antidéflagrant, lesdits moyens d'étanchéité comprenant ledit carter (11, 12) avec un joint antidéflagrant, et **en ce que** le dispositif de freinage comprend en outre des colonnes (45) qui soutiennent axialement des éléments mobiles du dispositif de freinage, lesdites colonnes étant montées d'un seul tenant sur ladite première partie (11), les extrémités desdites colonnes (5) étant adaptées pour être insérées dans des trous borgnes (46) correspondants dans ladite deuxième partie (12) afin de fournir une solidité de couplage plus importante entre lesdites première et deuxième parties.

2. Dispositif de freinage selon la revendication 1, dans lequel au moins une première extrémité (21) dudit arbre rotatif (20) comprend une assise axiale (22) conçue pour loger coaxialement en son sein, et de façon amovible, l'extrémité de couplage (5) d'un arbre entraîné par un moteur électrique (1) et pour permettre la rotation dudit arbre rotatif (20) par ledit moteur électrique (1).

3. Dispositif de freinage selon la revendication 2, dans lequel ladite assise axiale (22) est accessible par l'extérieur dudit carter.

4. Dispositif de freinage selon la revendication 2, dans lequel ladite assise (22) a une forme et des dimensions conçues pour loger l'extrémité de couplage (5) de l'arbre faisant saillie à l'avant d'un moteur électrique (1).

5. Moteur électrique antidéflagrant (1) du type autofreinant, **caractérisé en ce qu'**il comprend un dispositif de freinage (10) selon l'une quelconque des revendications 1 à 4.
